(19) Europäisches Patentamt / European Patent Office / Office européen des brevets

(11) **EP 4 375 620 A1**

(12) **EUROPEAN PATENT APPLICATION**

(43) Date of publication:
**29.05.2024  Bulletin 2024/22**

(21) Application number: **23212389.3**

(22) Date of filing: **27.11.2023**

(51) International Patent Classification (IPC):
**G01C 21/26** (2006.01)    **G06F 21/62** (2013.01)
**G08G 1/01** (2006.01)    **H04W 4/02** (2018.01)
**H04W 12/02** (2009.01)

(52) Cooperative Patent Classification (CPC):
**G01C 21/26; G06F 21/6254; G08G 1/0112; H04W 4/02; H04W 12/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.11.2022  US 202218059278**

(71) Applicant: HERE Global B.V.
**5611 ZT Eindhoven (NL)**

(72) Inventors:
• **Vidyakina, Elena**
  **Berlin (DE)**
• **Brown, Gavin**
  **Berlin (DE)**
• **Mumford, Elena**
  **Eindhoven (NL)**
• **Dov, Ori**
  **Berlin (DE)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **METHOD, APPARATUS, AND COMPUTER PROGRAM PRODUCT FOR INTELLIGENT GAP PLACEMENT WITHIN MOBILITY DATA USING JUNCTIONS INFERRED BY FEATURES OF THE MOBILITY DATA**

(57)    A method, apparatus and computer program product are provided in order to provide intelligent gap placement within mobility data using junctions inferred by features of the mobility data. In this regard, a sequence of location probe data points representative of travel of a vehicle along a portion of a road network during an interval of time is received. Additionally, junction behavior in the sequence of location probe data points is identified based on one or more features for the sequence of location probe data points. Based on a junction point that corresponds to a location probe data point immediately after a last probe data point in the junction, a gap placement in the sequence of location probe data points to generate at least a first subsequence of the location probe data points and a second subsequence of the location probe data points.

EP 4 375 620 A1

**Description**

**TECHNOLOGICAL FIELD**

An example embodiment of the present disclosure relates to generation of mobility data for vehicles and/or mobile devices and, more particularly, to an apparatus, method and computer program product for providing intelligent gap placement within mobility data using junctions inferred by features of the mobility data.

**BACKGROUND**

Mobility data from mobile devices is often employed for map creation and/or other purposes to facilitate location-based services for technologies such as, for example, autonomous vehicle navigation, vehicle fleet management, real-time traffic applications, etc. For example, the use of maps for navigation and autonomous vehicle control relies on map-matching locations of vehicles to underlying road maps to facilitate navigation, vehicle control, and/or any location-based services. Further, map-matching is often employed to establish a position of a vehicle or mobile device within an environment, e.g., relative to the road network. However, traditional map-matching processes are often resource intensive and/or often require processing capacity in addition to any latency that may be experienced. Further, map-matching of a vehicle or a mobile device to a location within a map may present privacy issues.

**BRIEF SUMMARY**

A method, apparatus and computer program product are provided in order to provide intelligent gap placement within mobility data using junctions inferred by features of the mobility data. As such, improved privacy and/or accuracy of mobility data generated by vehicles and/or mobile devices can be achieved. Moreover, improved navigation of a vehicle, improved route guidance for a vehicle, improved semi-autonomous vehicle control, and/or improved fully autonomous vehicle control can also be provided.

In an example embodiment, an apparatus includes processing circuitry and at least one memory including computer program code instructions that are configured to, when executed by the processing circuitry, cause the apparatus to receive a sequence of location probe data points representative of travel of a vehicle along a portion of a road network during an interval of time. The computer program code instructions are also configured to, when executed by the processing circuitry, cause the apparatus to identify junction behavior in the sequence of location probe data points based on one or more features for the sequence of location probe data points. The computer program code instructions are also configured to, when executed by the processing circuitry, cause the apparatus to apply, based on a junction point that corresponds to a location probe data point immediately after a last probe data point in the junction, a gap placement in the sequence of location probe data points to generate at least a first subsequence of the location probe data points and a second subsequence of the location probe data points. The computer program code instructions are also configured to, when executed by the processing circuitry, cause the apparatus to encode at least the first subsequence of the location probe data points and the second subsequence of the location probe data points in a database to provide anonymized mobility data for the vehicle.

In one or more embodiments, the computer program code instructions are configured to, when executed by the processing circuitry, cause the apparatus to determine the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the computer program code instructions are configured to, when executed by the processing circuitry, cause the apparatus to apply the one or more data features to a machine learning model configured to classify a portion of the sequence of location probe data points as the junction behavior. In one or more embodiments, the computer program code instructions are configured to, when executed by the processing circuitry, cause the apparatus to train the machine learning model based on a set of labels associated with junction probe data points and non-junction probe data points.

In one or more embodiments, the computer program code instructions are configured to, when executed by the processing circuitry, cause the apparatus to apply the one or more data features to a deterministic model configured to classify a portion of the sequence of location probe data points as the junction behavior. In one or more embodiments, the computer program code instructions are configured to, when executed by the processing circuitry, cause the apparatus to configure the deterministic model based on a set of rules associated with junction probe data points and non-junction probe data points.

In one or more embodiments, the computer program code instructions are configured to, when executed by the processing circuitry, cause the apparatus to identify a first portion in the sequence of location probe data points as a potential origin location of the vehicle during a journey associated with the travel of the vehicle along the portion of the road network. Additionally, in one or more embodiments, the computer program code instructions are configured to, when executed by the processing circuitry, cause the apparatus to identify the junction behavior in the first portion in the sequence of location probe data points based on the one or more features for the sequence of location probe data points. Additionally, in one or more embodiments, the computer program code instructions are configured to, when executed by the processing circuitry, cause the apparatus to apply the gap placement in the first portion in the sequence of location probe data points.

In one or more embodiments, the computer program code instructions are configured to, when executed by the processing circuitry, cause the apparatus to identify a last portion in the sequence of location probe data points as a potential destination location of the vehicle during a journey associated with the travel of the vehicle along the portion of the road network. Additionally, in one or more embodiments, the computer program code instructions are configured to, when executed by the processing circuitry, cause the apparatus to identify the junction behavior in the last portion in the sequence of location probe data points based on the one or more features for the sequence of location probe data points. Additionally, in one or more embodiments, the computer program code instructions are configured to, when executed by the processing circuitry, cause the apparatus to apply the gap placement in the last portion in the sequence of location probe data points.

In one or more embodiments, at least the first subsequence of the location probe data points and the second subsequence of the location probe data points correspond to the anonymized mobility data for the vehicle.

In another example embodiment, a computer-implemented method is provided. The computer-implemented method includes receiving a sequence of location probe data points representative of travel of a vehicle along a portion of a road network during an interval of time. The computer-implemented method also includes identifying junction behavior in the sequence of location probe data points based on one or more features for the sequence of location probe data points. The computer-implemented method also includes applying, based on a junction point that corresponds to a location probe data point immediately after a last probe data point in the junction, a gap placement in the sequence of location probe data points to generate at least a first subsequence of the location probe data points and a second subsequence of the location probe data points. The computer-implemented method also includes encoding at least the first subsequence of the location probe data points and the second subsequence of the location probe data points in a database to provide anonymized mobility data for the vehicle.

In one or more embodiments, the computer-implemented method also includes determining the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the computer-implemented method also includes applying the one or more data features to a machine learning model configured to classify a portion of the sequence of location probe data points as the junction behavior. In one or more embodiments, the computer-implemented method also includes training the machine learning model based on a set of labels associated with junction probe data points and non-junction probe data points.

In one or more embodiments, the computer-implemented method also includes applying the one or more data features to a deterministic model configured to classify a portion of the sequence of location probe data points as the junction behavior. In one or more embodiments, the computer-implemented method also includes configuring the deterministic model based on a set of rules associated with junction probe data points and non-junction probe data points.

In one or more embodiments, the computer-implemented method also includes identifying a first portion in the sequence of location probe data points as a potential origin location of the vehicle during a journey associated with the travel of the vehicle along the portion of the road network. In one or more embodiments, the computer-implemented method also includes identifying the junction behavior in the first portion in the sequence of location probe data points based on the one or more features for the sequence of location probe data points. In one or more embodiments, the computer-implemented method also includes applying the gap placement in the first portion in the sequence of location probe data points.

In one or more embodiments, the computer-implemented method also includes identifying a last portion in the sequence of location probe data points as a potential destination location of the vehicle during a journey associated with the travel of the vehicle along the portion of the road network. In one or more embodiments, the computer-implemented method also includes identifying the junction behavior in the last portion in the sequence of location probe data points based on the one or more features for the sequence of location probe data points. In one or more embodiments, the computer-implemented method also includes applying the gap placement in the last portion in the sequence of location probe data points.

In another example embodiment, a computer program product is provided. The computer program product includes at least one non-transitory computer readable storage medium having computer-executable program code instructions stored therein with the computer-executable program code instructions including program code instructions configured, upon execution, to receive a sequence of location probe data points representative of travel of a vehicle along a portion of a road network during an interval of time. The computer-executable program code instructions are also configured to identify junction behavior in the sequence of location probe data points based on one or more features for the sequence of location probe data points. The computer-executable program code instructions are also configured to apply, based on a junction point that corresponds to a location probe data point immediately after a last probe data point in the junction, a gap placement in the sequence of location probe data points to generate at least a first subsequence of the location probe data points and a second subsequence of the location probe data points. The computer-executable program code instructions are also configured to encode at least the first subsequence of the location probe data points and the second subsequence of the location probe data points in a database to provide anonymized mobility data for the vehicle.

In one or more embodiments, the computer-executable program code instructions are also configured to determine the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the computer-executable program code instructions are also configured to apply the one or more data features to a machine learning model configured to classify a portion of the sequence of location probe data points as the junction behavior. In one or more embodiments, the computer-executable program code instructions are also configured to train the machine learning model based on a set of labels associated with junction probe data points and non-junction probe data points.

In one or more embodiments, the computer-executable program code instructions are also configured to apply the one or more data features to a deterministic model configured to classify a portion of the sequence of location probe data points as the junction behavior. In one or more embodiments, the computer-executable program code instructions are also configured to configure the deterministic model based on a set of rules associated with junction probe data points and non-junction probe data points.

In one or more embodiments, the computer-executable program code instructions are also configured to identify a first portion in the sequence of location probe data points as a potential origin location of the vehicle during a journey associated with the travel of the vehicle along the portion of the road network. In one or more embodiments, the computer-executable program code instructions are also configured to identify the junction behavior in the first portion in the sequence of location probe data points based on the one or more features for the sequence of location probe data points. In one or more embodiments, the computer-executable program code instructions are also configured to apply the gap placement in the first portion in the sequence of location probe data points.

In one or more embodiments, the computer-executable program code instructions are also configured to identify a last portion in the sequence of location probe data points as a potential destination location of the vehicle during a journey associated with the travel of the vehicle along the portion of the road network. In one or more embodiments, the computer-executable program code instructions are also configured to identify the junction behavior in the last portion in the sequence of location probe data points based on the one or more features for the sequence of location probe data points. In one or more embodiments, the computer-executable program code instructions are also configured to apply the gap placement in the last portion in the sequence of location probe data points.

In one or more embodiments, at least the first subsequence of the location probe data points and the second subsequence of the location probe data points correspond to the anonymized mobility data for the vehicle.

In yet another example embodiment, an apparatus is provided that includes means for receiving a sequence of location probe data points representative of travel of a vehicle along a portion of a road network during an interval of time. The apparatus of this example embodiment also comprises means for identifying junction behavior in the sequence of location probe data points based on one or more features for the sequence of location probe data points. The apparatus of this example embodiment also comprises means for applying, based on a junction point that corresponds to a location probe data point immediately after a last probe data point in the junction, a gap placement in the sequence of location probe data points to generate at least a first subsequence of the location probe data points and a second subsequence of the location probe data points. The apparatus of this example embodiment also comprises means for encoding at least the first subsequence of the location probe data points and the second subsequence of the location probe data points in a database to provide anonymized mobility data for the vehicle.

In one or more embodiments, the apparatus of this example embodiment also comprises means for determining the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the apparatus of this example embodiment also comprises means for applying the one or more data features to a machine learning model configured to classify a portion of the sequence of location probe data points as the junction behavior. In one or more embodiments, the apparatus of this example embodiment also comprises means for training the machine learning model based on a set of labels associated with junction probe data points and non-junction probe data points.

In one or more embodiments, the apparatus of this example embodiment also comprises means for applying the one or more data features to a deterministic model configured to classify a portion of the sequence of location probe data points as the junction behavior. In one or more embodiments, the apparatus of this example embodiment also comprises means for configuring the deterministic model based on a set of rules associated with junction probe data points and non-junction probe data points.

In one or more embodiments, the apparatus of this example embodiment also comprises means for identifying a first portion in the sequence of location probe data points as a potential origin location of the vehicle during a journey associated with the travel of the vehicle along the portion of the road network. In one or more embodiments, the apparatus of this example embodiment also comprises means for identifying the junction behavior in the first portion in the sequence of location probe data points based on the one or more features for the sequence of location probe data points. In one or more embodiments, the apparatus of this example embodiment also comprises means for applying the gap placement in the first portion in the sequence of location probe data points.

In one or more embodiments, the apparatus of this example embodiment also comprises means for identifying a last portion in the sequence of location probe data points as a potential destination location of the vehicle during a journey associated with the travel of the vehicle along the portion of the road network. In one or more embodiments, the apparatus of this example embodiment also comprises means for identifying the junction behavior in the last portion in the sequence of location probe data points based on the one or more features for the sequence of location probe data points. In one or more embodiments, the apparatus of this example embodiment also comprises means for applying the gap placement in the last portion in the sequence of location probe data points.

In an example embodiment, an apparatus includes processing circuitry and at least one memory including computer program code instructions that are configured to, when executed by the processing circuitry, cause the apparatus to determine a sequence of location probe data points representative of travel of a vehicle along a portion of a road network during an interval of time. The computer program code instructions are also configured to, when executed by the processing circuitry, cause the apparatus to identify junction behavior in the sequence of location probe data points based on one or more features for the sequence of location probe data points. The computer program code instructions are also configured to, when executed by the processing circuitry, cause the apparatus to apply, based on a junction point that corresponds to a location probe data point immediately after a last probe data point in the junction, a gap placement in the sequence of location probe data points to generate at least a first subsequence of the location probe data points and a second subsequence of the location probe data points. In one or more embodiments, at least the first subsequence of the location probe data points and the second subsequence of the location probe data points correspond to anonymized mobility data for the vehicle associated with the road network. The computer program code instructions are also configured to, when executed by the processing circuitry, cause the apparatus to cause transmission of the anonymized mobility data to a server computing device.

In one or more embodiments, the computer program code instructions are configured to, when executed by the processing circuitry, cause the apparatus to determine the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the computer program code instructions are configured to, when executed by the processing circuitry, cause the apparatus to apply the one or more data features to a model configured to classify a portion of the sequence of location probe data points as the junction behavior.

In another example embodiment, a computer-implemented method is provided. The computer-implemented method includes determining a sequence of location probe data points representative of travel of a vehicle along a portion of a road network during an interval of time. The computer-implemented method also includes identifying junction behavior in the sequence of location probe data points based on one or more features for the sequence of location probe data points. The computer-implemented method also includes applying, based on a junction point that corresponds to a location probe data point immediately after a last probe data point in the junction, a gap placement in the sequence of location probe data points to generate at least a first subsequence of the location probe data points and a second subsequence of the location probe data points. In one or more embodiments, at least the first subsequence of the location probe data points and the second subsequence of the location probe data points correspond to anonymized mobility data for the vehicle associated with the road network. The computer-implemented method also includes causing transmission of the anonymized mobility data to a server computing device.

In one or more embodiments, the computer-implemented method also includes determining the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the computer-implemented method also includes applying the one or more data features to a model configured to classify a portion of the sequence of location probe data points as the junction behavior.

In another example embodiment, a computer program product is provided. The computer program product includes at least one non-transitory computer readable storage medium having computer-executable program code instructions stored therein with the computer-executable program code instructions including program code instructions configured, upon execution, to determine a sequence of location probe data points representative of travel of a vehicle along a portion of a road network during an interval of time. The computer-executable program code instructions are also configured to identify junction behavior in the sequence of location probe data points based on one or more features for the sequence of location probe data points. The computer-executable program code instructions are also configured to apply, based on a junction point that corresponds to a location probe data point immediately after a last probe data point in the junction, a gap placement in the sequence of location probe data points to generate at least a first subsequence of the location probe data points and a second subsequence of the location probe data points. In one or more embodiments, at least the first subsequence of the location probe data points and the second subsequence of the location probe data points correspond to anonymized mobility data for the vehicle associated with the road network. The computer-executable program code instructions are also configured to cause transmission of the anonymized mobility data to a server computing device.

In one or more embodiments, the computer-executable program code instructions are also configured to determine the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the computer-executable program code instructions are also configured to apply the one or more data features to a model configured to classify a portion of the sequence of location probe data points as the junction behavior.

In yet another example embodiment, an apparatus is provided that includes means for determining a sequence of location probe data points representative of travel of a vehicle along a portion of a road network during an interval of time. The apparatus of this example embodiment also comprises means for identifying junction behavior in the sequence of location probe data points based on one or more features for the sequence of location probe data points. The apparatus of this example embodiment also comprises means for applying, based on a junction point that corresponds to a location probe data point immediately after a last probe data point in the junction, a gap placement in the sequence of location probe data points to generate at least a first subsequence of the location probe data points and a second subsequence of the location probe data points. In one or more embodiments, at least the first subsequence of the location probe data points and the second subsequence of the location probe data points correspond to anonymized mobility data for the vehicle associated with the road network. The apparatus of this example embodiment also comprises means for causing transmission of the anonymized mobility data to a server computing device.

In one or more embodiments, the apparatus of this example embodiment also comprises means for determining the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

In one or more embodiments, the apparatus of this example embodiment also comprises means for applying the one or more data features to a model configured to classify a portion of the sequence of location probe data points as the junction behavior.

BRIEF DESCRIPTION OF THE DRAWINGS

Having thus described certain embodiments of the disclosure in general terms, reference will now be made to the accompanying drawings, which are not necessarily drawn to scale, and wherein:

Figure 1 is a block diagram of a system including an apparatus for providing intelligent gap placement within mobility data using junctions inferred by features of the mobility data in accordance with one or more example embodiments of the present disclosure;

Figure 2 is a flowchart illustrating operations performed, such as by the apparatus of Figure 1, in order to provide intelligent gap placement within mobility data using junctions inferred by features of the mobility data in accordance with one or more example embodiments of the present disclosure;

Figure 3 illustrates a system that includes a vehicle and the apparatus of Figure 1 in accordance with one or more example embodiments of the present disclosure;

Figure 4 illustrates a scenario associated with a sequence of location probe data points in accordance with one or more example embodiments of the present disclosure;

Figure 5 illustrates another scenario associated with two or more sequences of location probe data points after determining a gap placement in the sequence of location probe data points in accordance with one or more example embodiments of the present disclosure;

Figure 6 illustrates processing of a sub-trajectory in accordance with one or more example embodiments of the present disclosure;

Figure 7 illustrates processing of a gap in accordance with one or more example embodiments of the present disclosure;

Figure 8 illustrates a communication diagram of an example embodiment of a system in accordance with the present disclosure;

Figure 9 is an example embodiment of an architecture configured for implementing one or more embodiments described herein; and

Figure 10 illustrates a system configured to provide junction finder functionality in accordance with one or more example embodiments of the present disclosure.

DETAILED DESCRIPTION

Some embodiments of the present disclosure will now be described more fully hereinafter with reference to the accompanying drawings, in which some, but not all, embodiments of the disclosure are shown. Indeed, various embodiments of the disclosure can be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms can be used interchangeably to refer to data capable of being transmitted, received and/or stored in accordance with embodiments of the present disclosure. Thus, use of any such terms should not be taken to limit the spirit and scope of embodiments of the present disclosure.

Location-based services for technologies such as, for example, autonomous vehicle navigation, vehicle fleet management, real-time traffic applications, etc. benefit from mobility data collected from vehicles or mobile device in a geographical area. The quality of the mobility data is associated with an accuracy value and a privacy value. The accuracy value is generally related to the intrinsic utility of the mobility data towards generation of a particular location-based service. The privacy value generally reflects the sensitive information that the mobility data reveals about a respective user's habits, behaviors and/or personal information, such as, for example, the user's home address. Furthermore, the privacy value also generally reflects risk of the mobility data being related to an inadvertent disclosure or misuse of the mobility data.

Accordingly, it is generally desirable to collect as much mobility data as possible in order to maximize the accuracy of the location-based service, while also minimizing the associated risks for the privacy of users. To reduce this risk, a privacy-enhancing algorithm can be applied to the mobility data. Privacy-enhancing algorithms generally function by removing or altering privacy-revealing features of the mobility data. However, traditional privacy-enhancing algorithms often render the mobility data less accurate and therefore less valuable for location-based services and/or related technologies. Moreover, it is generally desirable for the mobility data to be anonymized in real-time (e.g., for traffic use cases) or in batch (e.g., for generating historical trajectories for mapping use cases).

An example privacy-enhancing algorithm is a split and gap anonymization algorithm. With a conventional split and gap anonymization algorithm, user anonymity can be provided by adding confusion regarding which sub-trajectories form a journey portion of mobility data. For example, a conventional split and gap anonymization algorithm can randomly place gaps along a length of a journey, with a gap generally being located between two sub-trajectories on a same road. However, it is generally desirable to improve anonymization and/or increase confusion related to sub-trajectories that form a journey portion of mobility data as compared to a conventional split and gap anonymization algorithm that randomly provides gaps in mobility data.

To address these and/or other issues, an apparatus, method, and computer program product are provided in accordance with an example embodiment in order to provide intelligent gap placement within mobility data using junctions inferred by features of a trajectory. The intelligent gap placement can provide smart gap placement at junctions to, for example, maximize a number of times a gap is added on a junction where multiple maneuvers are possible. The intelligent gap placement within the mobility data can provide improved security and/or accuracy of the mobility data for employment by location-based services for technologies such as, for example, autonomous vehicle navigation, vehicle fleet management, real-time traffic applications, etc. Mobility data may be defined as a set of probe data points (e.g., location probe data points) related to geospatial observations, each of which includes at least a latitude, and/or longitude location. Additional information may be associated with the probe data points, such as, for example, speed, acceleration, heading, a timestamp, and/or other data. In certain embodiments, the mobility data can include additional data derived from a sequence of probe data points such as, for example, a time-windowed headings difference between probe data points computed by a mobile device and/or augmented to a probe data point tuple. In various embodiments, a trajectory can include a set of probe data points, where probe data points of a trajectory may include a trajectory identifier that associates the probe data points of the trajectory with one another. Mobility data captured in trajectories can be partitioned in a set of trajectories (e.g., trajectory data), each of which identifies the movement of a vehicle or mobile device over time. In various embodiments, a trajectory can correspond to a portion of a road network or other path.

A junction can be a portion of a trajectory where multiple maneuvers are possible by a vehicle or mobile device. By removing mobility data associated with a junction, it can become significantly harder for an attacker to successfully reconstruct a trajectory. In various embodiments, a junction finder can be employed to identify potential locations to add gaps in the mobility during an anonymization process for the mobility data. In various embodiments, the junction finder can employ a geometry and/or one or more other features of the trajectory to determine a gap placement within the mobility data.

In one or more embodiments, a model can be trained to predict whether a probe data point is a first point of a trajectory after a junction. The model can provide the prediction regarding a probe data point (e.g., whether a probe data point is a first point of a trajectory after a junction) based on one or more features associated with the trajectory and/or the junction. For example, the one or more features associated with the trajectory and/or junction can include, but is not limited to, a time-windowed headings difference between probe data points along the trajectory, a speed of one or more probe data points, acceleration of a vehicle or mobile device at one or more probe data points, time data indicative of a duration of time for a turn maneuver related to a vehicle or mobile device at a potential junction, latitude data related to a vehicle or mobile device at one or more probe data points, longitude data related to a vehicle or mobile device at one or more probe data points, timestamp data related to capture of one or more probe data points, heading data indicative of a direction of travel associated with a vehicle or mobile device at one or more probe data points, sensor data associated with a vehicle or mobile device, predetermined map data associated with one or more probe data points, and/or another feature associated with a trajectory. In various embodiments, the one or more features can be weighted based on road network characteristics, a sampling rate for the mobility data, and/or other criteria associated with the trajectory.

The model can be a machine learning model such as, for example, a classification model, a decision tree model, or another type of machine learning model that takes into account similar features amongst the mobility data. For example, a model configured as a machine learning model can be trained based on labels associated with junction probe data points and non-junction probe data points such that the machine learning model can learn combinations of probe data points that correspond to a junction. The model can alternatively be another type of model such as, for example, a deterministic model. For example, a model configured as a deterministic model can apply a set of rules to classify a portion a trajectory that corresponds to a junction. In various embodiments, the model can be deployed (e.g., via a junction detection mode) to determine a probability of respective probe data points from a set of probe data points corresponding to a junction.

In various embodiments, the mobility data can be anonymized based on trajectory parameters (e.g., a minimum sub-trajectory size and a maximum sub-trajectory size after applying the gap) and/or gap parameters (e.g., a minimum gap size and a maximum gap size). For example, placement of the gap within the mobility data can be determined based on length of sub-trajectories and length of gaps such that a size of sub-trajectories and gaps offers optimal utility for location-based services. In various embodiments, the anonymized mobility data can be published as a content product. For example, completion of anonymization of the mobility data can trigger publication of the anonymized mobility data as a content product. In certain embodiments, the anonymized mobility data can be configured as a downloadable dataset and/or a purchasable dataset for consumption by one or more mobile devices and/or one or more other types of computing devices. Additionally or alternatively, the anonymized mobility data can be employed to improve a real-time predictive traffic product. In certain embodiments, the anonymized mobility data can be configured and/or augmented with sensor data (e.g., sensor data objects detected by a vehicle). Processing of the sensor data may be authorized, in various embodiments, in response to the anonymization of the mobility data.

Accordingly, anonymization of trajectories associated with mobility data can be provided while also providing sufficient information for location-based services and/or other use cases for trajectories. For example, mobility data and related trajectory information can be gathered and shared in a manner that anonymizes the source of the mobility while also maximizing difficulty of unmasking a source of the mobility. Thus, structured trajectories can be used for location-based services in a manner that maintains the privacy of users providing mobility data to optimize useful location-based trajectory information for use with location-based services. Moreover, improved location-based predictions for vehicles and/or mobile devices can be provided. Computational resources for obtaining mobility data from vehicles and/or mobile devices can also be conserved.

The anonymized mobility data may additionally facilitate improved navigation of a vehicle, improved route guidance for a vehicle, improved semi-autonomous vehicle control, and/or improved fully autonomous vehicle control. For example, autonomous driving has become a focus of recent technology with recent advances in machine learning, computer vision, and computing power able to conduct real-time mapping and sensing of a vehicle's environment. Such an understanding of the environment enables autonomous driving in two distinct ways. Primarily, real-time or near real-time sensing of the environment can provide information about potential obstacles, the behavior of others on the roadway, and areas that are navigable by the vehicle. An understanding of the location of other vehicles and/or what the other vehicles have done and may be predicted to do may be useful for a vehicle to safely plan a route. However, redundant mechanisms are of importance to ensure reliable operation of vehicles in environments to compensate for when one sensor or array of sensors is compromised. As such, various embodiments described herein can employ sensors to collect probe data points to identify a location of vehicles along a road network which can provide vehicle localization to enhance location data, navigation, and/or traffic predictions for vehicles.

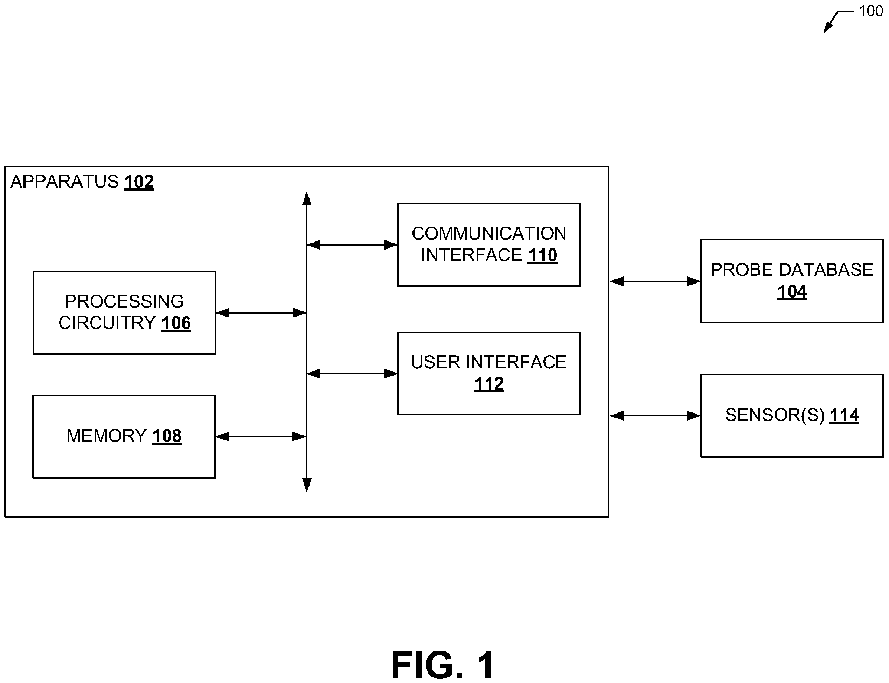

With reference to Figure 1, a system 100 configured to provide intelligent gap placement within mobility data using junctions inferred by features of a trajectory is depicted, in accordance with one or more embodiments of the present disclosure. In the illustrated embodiment, the system 100 includes an apparatus 102 and a probe database 104. As described further below, the apparatus 102 is configured in accordance with an example embodiment of the present disclosure to provide anonymized localization of a vehicle and/or a mobile device. The apparatus 102 can be embodied by any of a wide variety of computing devices including, for example, a computer system of a vehicle, a vehicle system of a vehicle, a navigation system of a vehicle, a control system of a vehicle, an electronic control unit of a vehicle, an autonomous vehicle control system (e.g., an autonomous-driving control system) of a vehicle, a mapping system of a vehicle, an Advanced Driver Assistance System (ADAS) module of a vehicle, or any other type of computing device carried by or remote from the vehicle including, for example, a server or a distributed network of computing devices.

In an example embodiment where some level of vehicle autonomy is involved, the apparatus 102 can be embodied or partially embodied by a computing device of a vehicle that supports safety-critical systems such as the powertrain (engine, transmission, electric drive motors, etc.), steering (e.g., steering assist or steer-by-wire), and/or braking (e.g., brake assist or brake-by-wire). In certain embodiments, the computing device may be a fixed computing device, such as a built-in vehicular navigation device, assisted driving device, or the like. However, as certain embodiments described herein may optionally be used for map generation, map updating, and map accuracy confirmation, other embodiments of the apparatus may be embodied or partially embodied as a mobile terminal, such as a mobile device, a personal digital assistant (PDA), mobile telephone, smart phone, personal navigation device, smart watch, tablet computer, camera or any combination of the aforementioned and other types of voice and text communications systems. Regardless of the type of computing device that embodies the apparatus 102, the apparatus 102 of an example embodiment includes, is associated with or otherwise is in communication with processing circuitry 106, memory 108 and optionally a communication interface 110.

In certain embodiments, the apparatus 102 can be embodied by or associated with a plurality of computing devices that are in communication with or otherwise networked with one another such that the various functions performed by the apparatus may be divided between the plurality of computing devices that operate in collaboration with one another.

In some embodiments, the processing circuitry 106 (and/or co-processors or any other processors assisting or otherwise associated with the processing circuitry 106) can be in communication with the memory 108 via a bus for passing information among components of the apparatus 102. The memory 108 can be non-transitory and can include, for example, one or more volatile and/or non-volatile memories. In other words, for example, the memory 108 may be an electronic storage device (for example, a computer readable storage medium) comprising gates configured to store data (for example, bits) that can be retrievable by a machine (for example, a computing device like the processing circuitry 106). The memory 108 can be configured to store information, data, content, applications, instructions, or the like for enabling the apparatus 102 to carry out various functions in accordance with an example embodiment of the present disclosure. For example, the memory 108 can be configured to buffer input data (e.g., probe data, location probe data points, etc.) for processing by the processing circuitry 106. Additionally or alternatively, the memory 108 can be configured to store instructions for execution by the processing circuitry 106.

The processing circuitry 106 can be embodied in a number of different ways. For example, the processing circuitry 106 may be embodied as one or more of various hardware processing means such as a processor, a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry 106 can include one or more processing cores configured to perform independently. A multi-core processor can enable multiprocessing within a single physical package. Additionally or alternatively, the processing circuitry 106 can include one or more processors configured in tandem via the bus to enable independent execution of instructions, pipelining and/or multithreading.

In an example embodiment, the processing circuitry 106 can be configured to execute instructions stored in the memory 108 or otherwise accessible to the processing circuitry 106. Alternatively or additionally, the processing circuitry 106 can be configured to execute hard coded functionality. As such, whether configured by hardware or software methods, or by a combination thereof, the processing circuitry 106 can represent an entity (for example, physically embodied in circuitry) capable of performing operations according to an embodiment of the present disclosure while configured accordingly. Thus, for example, when the processing circuitry 106 is embodied as an ASIC, FPGA or the like, the processing circuitry 106 can be specifically configured hardware for conducting the operations described herein. Alternatively, as another example, when the processing circuitry 106 is embodied as an executor of software instructions, the instructions can specifically configure the processing circuitry 106 to perform the algorithms and/or operations described herein when the instructions are executed. However, in some cases, the processing circuitry 106 can be a processor of a specific device (for example, a computing device) configured to employ an embodiment of the present disclosure by further configuration of the processor by instructions for performing the algorithms and/or operations described herein. The processing circuitry 106 can include, among other things, a clock, an arithmetic logic unit (ALU) and/or one or more logic gates configured to support operation of the processing circuitry 106.

The apparatus 102 of an example embodiment can also optionally include the communication interface 110 that can be any means such as a device or circuitry embodied in either hardware or a combination of hardware and software that is configured to receive and/or transmit data from/to other electronic devices in communication with the apparatus 102, such as the probe database 104 that stores data (e.g., probe data, location probe data points, geo-referenced locations, global navigation satellite system (GNSS) probe data, global positioning system (GPS) probe data, Galileo probe data, GLONASS probe data, BeiDou probe data, etc.) generated and/or employed by the processing circuitry 106. Additionally or alternatively, the communication interface 110 can be configured to communicate in accordance with various wireless protocols including, but not limited to, fourth-generation (4G), fifth-generation (5G), sixth-generation (6G), Global System for Mobile Communications (GSM), Long Term Evolution (LTE), etc. In this regard, the communication interface 110 can include, for example, an antenna (or multiple antennas) and supporting hardware and/or software for enabling communications with a wireless communication network. In this regard, the communication interface 110 can include, for example, an antenna (or multiple antennas) and supporting hardware and/or software for enabling communications with a wireless communication network. Additionally or alternatively, the communication interface 110 can include the circuitry for interacting with the antenna(s) to cause transmission of signals via the antenna(s) or to handle receipt of signals received via the antenna(s). In some environments, the communication interface 110 can alternatively or also support wired communication and/or may alternatively support vehicle to vehicle or vehicle to infrastructure wireless links.

In certain embodiments, the apparatus 102 can also optionally include or otherwise be in communication with a user interface 112. The user interface 112 can include a display, a touch screen display, a keyboard, a mouse, a joystick, speakers or other input/output mechanisms. In some embodiments, the processing circuitry 106 can comprise user interface circuitry configured to control at least some functions of one or more input/output mechanisms of the user interface 112. The processing circuitry 106 can be configured to control one or more functions of one or more input/output mechanisms of the user interface 112 through computer program instructions (e.g., software and/or firmware) stored on a memory (e.g., the memory 108 and/or the like) accessible to the processing circuitry 106.

In certain embodiments, the apparatus 102 can be in communication with one or more sensors 114, such as one or more GNSS sensors, one or more GPS sensors, one or more Galileo sensors, one or more GLONASS sensors, one or more BeiDou sensors, one or more accelerometer sensors, one or more LiDAR sensors, one or more radar sensors, one or more gyroscope sensors, and/or one or more other sensors. Any of the one or more sensors 114 may be used to sense information regarding movement, positioning, and/or orientation of a vehicle for use in navigation assistance and/or autonomous vehicle control, as described herein according to example embodiments. In certain embodiments, sensor data transmitted by the one or more sensors 114 can be transmitted via one or more wired communications and/or one or more wireless communications (e.g., near field communication, or the like). In some environments, the communication interface 110 can support wired communication and/or wireless communication with the one or more sensors 114. In some example embodiments, such sensors may be implemented in a vehicle or other remote apparatus, and the information detected may be transmitted to the apparatus 102, such as by near field communication (NFC) or the like.

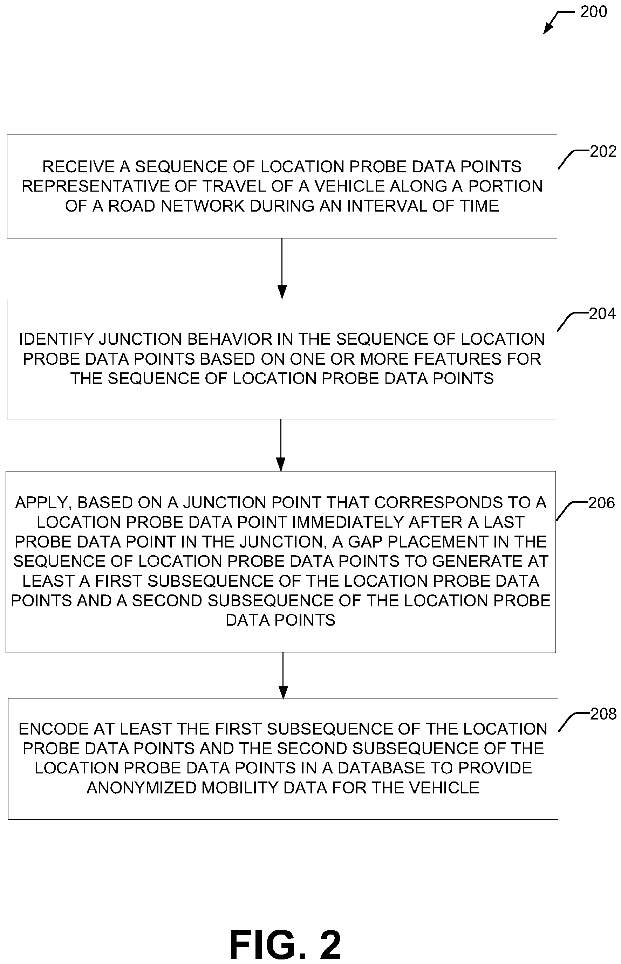

Figure 2 illustrates a flowchart depicting a method 200 according to an example embodiment of the present disclosure. It will be understood that each block of the flowchart and combination of blocks in the flowchart can be implemented by various means, such as hardware, firmware, processor, circuitry, and/or other communication devices associated with execution of software including one or more computer program instructions. For example, one or more of the procedures described above can be embodied by computer program instructions. In this regard, the computer program instructions which embody the procedures described above can be stored, for example, by the memory 108 of the apparatus 102 employing an embodiment of the present disclosure and executed by the processing circuitry 106. As will be appreciated, any such computer program instructions can be loaded onto a computer or other programmable apparatus (for example, hardware) to produce a machine, such that the resulting computer or other programmable apparatus implements the functions specified in the flowchart blocks. These computer program instructions can also be stored in a computer-readable memory that can direct a computer or other programmable apparatus to function in a particular manner, such that the instructions stored in the computer-readable memory produce an article of manufacture the execution of which implements the function specified in the flowchart blocks. The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

Referring now to Figure 2, the operations performed, such as by the apparatus 102 of Figure 1, in order to provide intelligent gap placement within mobility data using junctions inferred by features of a trajectory are depicted, in accordance with one or more embodiments of the present disclosure. As shown in block 202 of Figure 2, the apparatus 102 includes means, such as the processing circuitry 106, the memory 108, or the like, configured to receive a sequence of location probe data points representative of travel of a vehicle along a portion of a road network during an interval of time. The road network can comprise road segments associated with a roadway. In various embodiments, the road network can be configured with a series of road links and nodes representing junctions. For example, a node can exist at a junction with another road link or at a disconnected end of a road (e.g., a cul-de-sac). Additionally, in various embodiments, a road or street can be composed of a series of road links. The location probe data points associated with respective locations of the vehicle traveling along the road network during an interval of time. As such, the location data probe points can be representative of travel of the vehicle along the road network.

In certain embodiments, the location probe data points can be captured via the one or more sensors 114. For example, the location probe data points can be captured via one or more GNSS sensors (e.g., one or more GPS sensors, one or more Galileo sensors, one or more GLONASS sensors, one or more BeiDou sensors, etc.) associated with the vehicle traveling along the road network. In certain embodiments, the location probe data points can be captured via respective navigation systems and/or respective location tracking systems associated with the vehicle. The one or more sensors 114 can be carried by the vehicle, for example, as the vehicles travel along the road network (e.g., as the vehicles travel along a road segment of the road network). In an embodiment, at least a portion of the location probe data points can be stored locally by a memory (e.g., the memory 108) or the like accessible by the processing circuitry 106. Additionally or alternatively, at least a portion of the location data probe points can be stored remotely by cloud storage, a remote server, a remote database or the like accessible by the processing circuitry 106. For instance, in an embodiment, at least a portion of the location data probe points can be stored in the probe database 104.

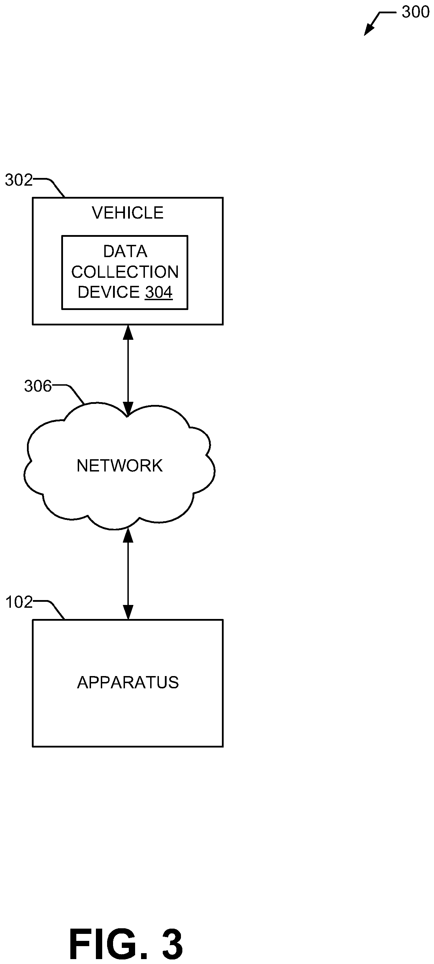

An example system 300 that includes a vehicle that generates at least a portion of the location probe data points associated with the road network is depicted in Figure 3. It is to be appreciated that the location probe data points can be anonymized without being correlated to the road network and/or a particular road segment of the road network. For example, correlation of particular location probe data points with a specific road link or road segment (e.g., via map matching) can occur after anonymization of the location probe data points for use in traffic prediction, sensor data ingestion, etc. The system includes a vehicle 302 and the apparatus 102. As shown in Figure 3, the vehicle 302 includes a data collection device 304. The data collection device 304 can be configured to capture one or more location probe data points as the vehicle 302 travels along a road network. In an embodiment, the data collection device 304 can include one or more sensors from the one or more sensors 114. In an embodiment, the location probe data points can include geographic coordinates for the vehicle 302. In an embodiment, the location probe data points can include latitude data and/or longitude data defining the location of the vehicle 302. For example, in an embodiment, the apparatus 102, such as the processing circuitry 106, can receive the location probe data points from a GNSS or other location sensor of the vehicle 302. In another embodiment, the apparatus 102, such as the processing circuitry 106, can receive the location probe data points from a LiDAR sensor of the vehicle 302. In yet another embodiment, the apparatus 102, such as the processing circuitry 106, can receive the location probe data points from one or more ultrasonic sensors and/or one or more infrared sensors of the vehicle 302.

The data collection device 304 can be mounted, in an embodiment, within the vehicle 302, such as a component of a navigation system, an ADAS or the like. Alternatively, the data collection device 304 can be carried by a passenger within the vehicle 302, such as in an instance in which the data collection device 304 is embodied by mobile device, a smartphone, a tablet computer, a wearable device, a virtual reality device or another portable computing device carried by the passenger riding within the vehicle 302. In an aspect, the data collection device 304 can repeatedly capture at least a portion of the location probe data points as the data collection device 304 moves along the road network. For example, the data collection device 304 can capture at least a portion of the location probe data points at a defined frequency and/or at a defined sampling rate.

Each location probe point from the location probe data points of the road network defines a location at which the location probe point was captured. In an aspect, each location probe point from the location probe data points can represent the location in terms of latitude and longitude associated with the road network. Additionally or alternatively, each location probe point from the location probe data points associated with the road network can be map matched so as to be associated with a respective road network. Each location probe point from the location probe data points associated with the road network can additionally be associated with a variety of other information including, for example, a speed of the vehicle 302 associated with capture of the location probe point, acceleration of the vehicle 302 associated with capture of the location probe point, a time at which the location probe point was captured, an epoch at which the location probe point was captured, a direction of travel of the vehicle 302 associated with capture of the location probe point, an altitude of the vehicle 302 associated with capture of the location probe point, a pitch of the vehicle 302 about a traverse axis associated with capture of the location probe point, time data indicative of a duration of time for a turn maneuver by the vehicle 302, a vehicle type associated with the vehicle 302, a road condition associated with the road network during the capture of the location probe point, an environmental condition associated with the road network during the capture of the location probe point, other information associated with the vehicle 302, other information associated with capture of the location probe point, etc.

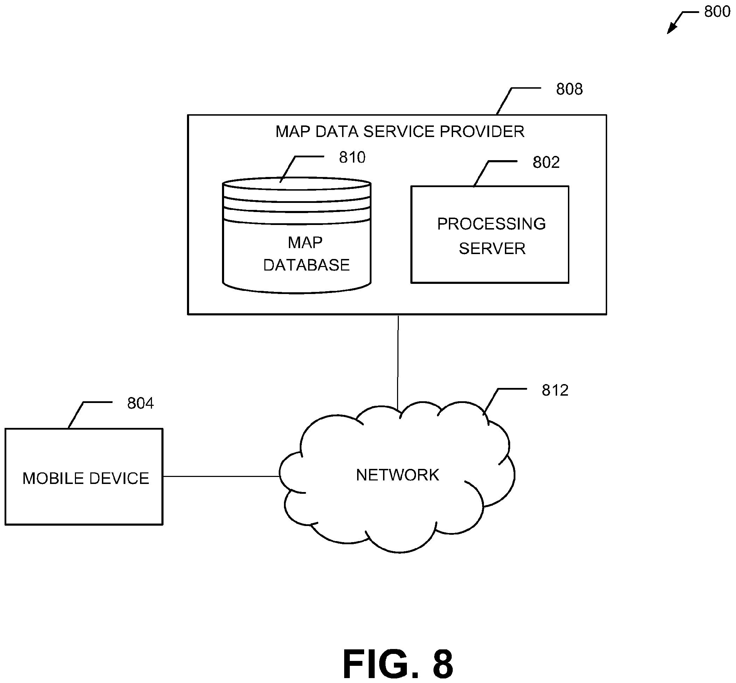

In one or more embodiments, the apparatus 102, such as the processing circuitry 106 and/or the communication interface 110, can be configured to communicate with the vehicle 302 and/or one or more other vehicles via a network 306. The network 306 can be one or more wireless networks and/or one or more wired networks such as, for example, a wired or wireless Personal Area Network (PAN), Local Area Network (LAN), Metropolitan Area Network (MAN), Wide Area Network (WAN), cellular network, and/or the like. In some embodiments, the network 306 can include an automotive cloud, a digital transportation infrastructure (DTI), a radio data system (RDS), a high definition (HD) radio, another digital radio system, and/or the like. Additionally, it is to be appreciated that, in certain embodiments, the apparatus 102 can be embodied by the data collection device 304 for the vehicle 302. In such embodiments, the apparatus 102 can be in communication with a server computing device (e.g., map data service provider 808 illustrated in Figure 8) associated with a location-based service, a traffic service, a mapping service, another type of service, etc.

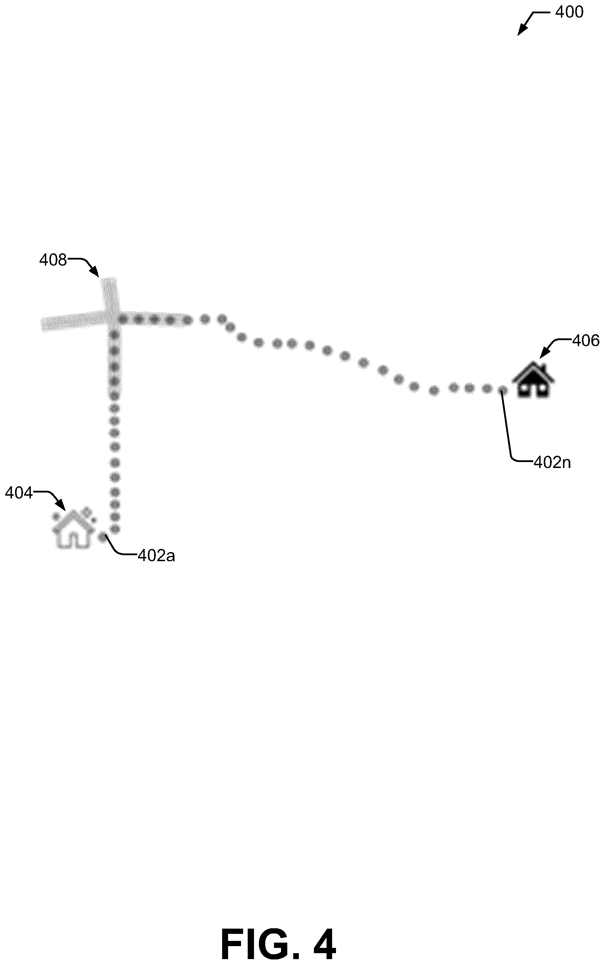

Referring now to Figure 4, an example scenario 400 associated with a sequence of location probe data points is illustrated. For example, the scenario 400 as illustrated includes a sequence of location probe data points 402a-n that represent travel of the vehicle 302 along a road network. The sequence of location probe data points 402a-n can correspond to a trajectory. Additionally, the road network can be defined by a starting location 404 and an ending location 406. The road network can also include a junction 408 between the starting location 404 and the ending location 406. The sequence of location probe data points 402a-n can also correspond to mobility data captured by the vehicle 302. In various embodiments, it is desirable to anonymize the sequence of location probe data points 402a-n to improve privacy of a user associated with the vehicle 302. For example, the sequence of location probe data points 402a-n can represent a non-anonymized trajectory.

Referring back to Figure 2, as shown in block 204 of Figure 2, the apparatus 102 includes means, such as the processing circuitry 106, the memory 108, or the like, configured to identify junction behavior in the sequence of location probe data points based on one or more features for a trajectory associated with the sequence of location probe data points. The trajectory can be a trajectory of the vehicle as represented by the sequence of location probe data points. For example, the trajectory can correspond to at least a portion of the road network. However, it is to be appreciated that, in certain embodiments, the trajectory can be defined without being correlated to the road network. For example, in certain embodiments, the trajectory can be defined by the sequence of location probe data points without being correlated to a specific portion of the road network. The junction behavior can correspond to a junction (e.g., junction geometry, a junction portion, etc.) of the trajectory where multiple maneuvers are possible by the vehicle. For instance, the vehicle may make a turn maneuver (e.g., a 90 degree turn or approximately 90 degree turn) at the junction to change a direction of travel of the vehicle. Additionally, it may be possible for the vehicle to make one or more other turn maneuvers to change direction of travel of the vehicle and/or a maneuver to maintain a direction of travel of the vehicle at the junction. As an example, the junction 408 illustrated in Figure 4 provides the possibility for the vehicle 302 to make a turn maneuver in a rightward direction, a turn maneuver to a leftward direction, or to maintain a direction of travel for the vehicle 302.

The one or more features for the trajectory can include but is not limited to, a time-windowed headings difference between location probe data points along the trajectory, a speed of a vehicle or mobile device at one or more location probe data points, acceleration of a vehicle or mobile device at one or more location probe data points, time data indicative of a duration of time for a turn maneuver related to a vehicle or mobile device at a potential junction, latitude data related to a vehicle or mobile device at one or more location probe data points, longitude data related to a vehicle or mobile device at one or more location probe data points, timestamp data related to capture of one or more location probe data points, heading data indicative of a direction of travel associated with a vehicle or mobile device at one or more location probe data points, sensor data associated with a vehicle or mobile device at one or more location probe data points, predetermined map data associated with one or more location probe data points, and/or another feature associated with the trajectory. In various embodiments, the one or more features can be employed to infer geometry of the trajectory to classify one or more portions of the trajectory as a junction geometry or junction behavior. The geometry of the trajectory can include, but is not limited to, a shape of the trajectory, a shape of one or more sub-trajectories of the trajectory, a shape of the junction, a length of the trajectory, a length of one or more sub-trajectories of the trajectory, a length of the junction, a size of the trajectory, a size of one or more sub-trajectories of the trajectory, a size of the junction, a relative position (e.g., an arrangement) of location probe data points associated with the trajectory, a relative position (e.g., an arrangement) of location probe data points associated with one or more sub-trajectories of the trajectory, and/or a relative position (e.g., an arrangement) of location probe data points associated with the junction. In various embodiments, the one or more features can be weighted based on road network characteristics, a sampling rate for the sequence of location probe data points, other criteria associated with the trajectory, and/or other criteria associated with the junction.

As shown in block 206 of Figure 2, the apparatus 102 includes means, such as the processing circuitry 106, the memory 108, or the like, configured to apply, based on a junction point that corresponds to a location probe data point immediately after a last probe data point in the junction, a gap placement in the sequence of location probe data points to generate at least a first subsequence of the location probe data points and a second subsequence of the location probe data points. In various embodiments, the apparatus 102, such as the processing circuitry 106, can be configured to determine the first gap placement based on inferred junction geometry associated with the trajectory and/or the junction.

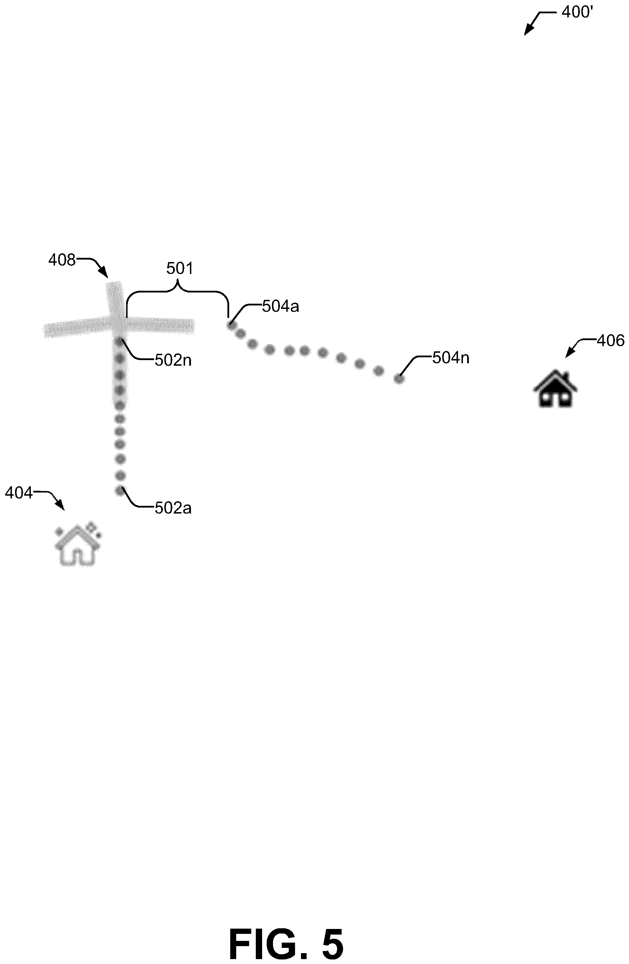

Figure 5 illustrates example scenario 400' associated with two or more subsequences of location probe data points after determining a gap placement in the sequence of location probe data points illustrated in the scenario 400. For example, a gap 501 can be placed in the sequence of location probe data points 402a-n to form a first subsequence of location probe data points 502a-n prior to the junction 408 and a second subsequence of location probe data points 504a-n after the junction 408. The first subsequence of location probe data points 502a-n can represent a first sub-trajectory of the trajectory for the vehicle 302 and the second subsequence of location probe data points 504a-n can represent a second sub-trajectory of the trajectory for the vehicle 302. Additionally, the first subsequence of location probe data points 502a-n and the second subsequence of location probe data points 504a-n can correspond to a modified sequence of the location probe data points for the vehicle 302.

In various embodiments, the first subsequence of location probe data points 502a-n can include one or more location probe data points associated with the junction 408. However, the first subsequence of location probe data points 502a-n can be configured with no location probe data points from the junction 408. Accordingly, improved anonymization between the first subsequence of location probe data points 502a-n and the second subsequence of location probe data points 504a-n can be provided.

In various embodiments, the apparatus 102, such as the processing circuitry 106, can be configured to process the sequence of location probe data points based on an order of respective timestamps for the location probe data points. Additionally, the apparatus 102, such as the processing circuitry 106, can be configured to identify a portion of the sequence of location probe data points as either as a sub-trajectory or as a gap in an alternating manner. When processing a sub-trajectory, the apparatus 102, such as the processing circuitry 106, can be configured to determine a size for the sub-trajectory such that the sub-trajectory size is within a set of anonymization parameters and/or that the sub-trajectory includes as little junction probe data points as possible. For example, the apparatus 102, such as the processing circuitry 106, can be configured to select an end-probe of a sub-trajectory between an earliest point (e.g., according to anonymization parameters) to end the trajectory and the first minimum junction point after the sub-trajectory and before another sub-trajectory in the sequence of location probe data points.

When processing a gap, the apparatus 102, such as the processing circuitry 106, can be configured to determine a gap size such that the gap size is within a set of parameters and/or that the gap includes as many junction probe data points as possible.

For example, the apparatus 102, such as the processing circuitry 106, can be configured to select an end-probe of the gap between the last junction maximum point after the earliest possibility to end the gap and a latest point (e.g., according to anonymization parameters) place to end another gap.

In an example embodiment, the apparatus 102, such as the processing circuitry 106, can be configured to process the sequence of location probe data points in accordance with the following pseudo code:

1. Initialize time $t_{start}$ for an earliest unprocessed location probe data point with a timestamp of the very first location probe data point of a trajectory $R$.
2. Initialize the variable *state* with "sub-trajectory".
3. Sort probes in $R$ according to respective timestamps.
4. While there are unprocessed probes, repeat the steps 5-6:
5. If state is "sub-trajectory" find the earliest junction point $j_{min}$, such that $T_1 \leq j_{min} \leq T_2$,

    a. If $j_{min}$ exists, we select the sub-trajectory end randomly from the interval $[\max(prev(j_{min}) - gap_{min}, T_1), prev(j_{min})]$.
    b. If $j_{min}$ does not exist, select the sub-trajectory end randomly from the interval $[T_1, T_2]$

and also change the *state* to "gap".
6. If state is "gap" we find the latest junction point $j_{max}$, such that that $G_1 \leq j_{max} \leq G_2$,

    a. *If $j_{max}$ exists, select the gap end (e.g., a new trajectory start) randomly from the interval $[j_{max}, G_2]$.*
    b. *If $j_{max}$ does not exist, select the gap end randomly from the interval $[G_1, G_2]$*

and also change the state to "sub-trajectory",

where $R$ corresponds to a trajectory; $t_{start}$ corresponds to a beginning of a sub-trajectory; $g_{start}$ corresponds to a beginning of a gap; $[st_{min}, st_{max}]$ corresponds to minimum and maximum sizes of sub-trajectories according to anonymization parameters; $[gap_{min}, gap_{max}]$ corresponds to minimum and maximum sizes of gaps according to anonymization parameters; $T_1$ corresponds to an earliest possible end of a sub-trajectory originated at $t_{start}$ (e.g., corresponds to the minimum condition of sub-trajectory length $t_{start} + st_{min}$); $T_2$ corresponds to a latest possible end of sub-trajectory originated at $t_{start}$ (e.g., corresponds to the maximum condition of sub-trajectory length $t_{start} + st_{max}$); $G_1$ corresponds to an earliest possible end of gap originated at $g_{start}$ (e.g., corresponds to the minimum condition of gap length $g_{start} + gap_{min}$); $G_2$ corresponds to a latest possible end of gap originated at $g_{start}$ (e.g., corresponds to the maximum condition of gap length $g_{start} + gap_{max}$); prev(x) corresponds to the point before probe x; and $j$ corresponds to a point immediately after a junction.

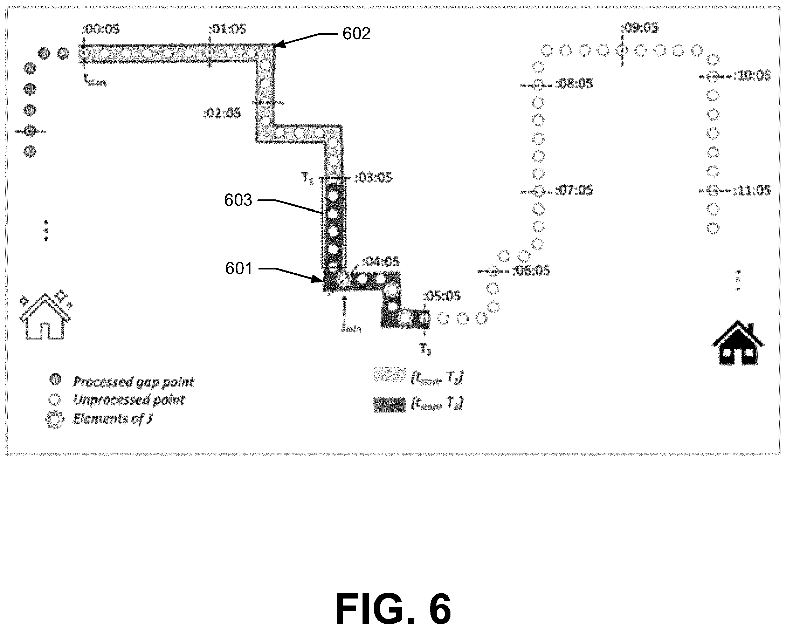

Figure 6 illustrates step 5 of the above-noted pseudo code related to processing a sub-trajectory, in accordance with one or more embodiments of the present disclosure. For example, a portion 601 of a sequence of location probe data points can correspond to all probes that can be marked as sub-trajectory for an interval $[t_{start}, T_2]$. Additionally, a portion 602 of a sequence of location probe data points can correspond to the probes to be marked as a sub-trajectory for an interval $[t_{start}, T_1]$. Moreover, the portion 603 within the portion 601 can corresponds to probes deemed to be good candidates as sub-trajectory ends to minimize a number of junctions contained by the sub-trajectory.

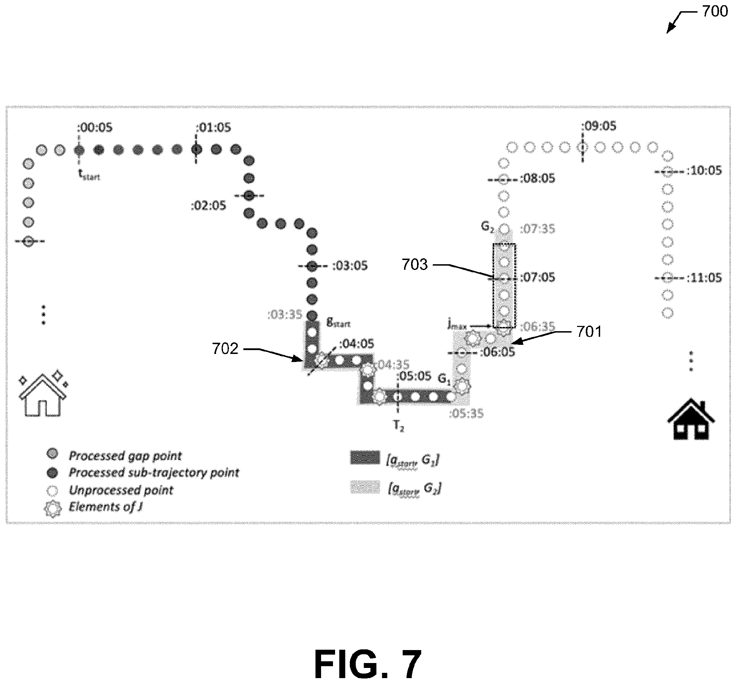

Figure 7 illustrates step 6 of the above-noted pseudo code related to processing a gap, in accordance with one or more embodiments of the present disclosure. For example, a portion 701 of a sequence of location probe data points can correspond to all the probes that can be marked as a gap for an interval $[g_{start}, G_2]$. Additionally, a portion 702 of a sequence of location probe data points can correspond to the probes to be marked as a gap for an interval $[g_{start}, G_1]$. Moreover, the portion 703 within the portion 701 can corresponds to probes that are deemed to be good candidates as gap-ends to maximize the number of junctions contained by the gap.

In another example embodiment, the apparatus 102, such as the processing circuitry 106, can be configured to process the sequence of location probe data points in accordance with the following additional pseudo code for each identified sub-trajectory:

1. For each point in interval $[T_1, T_2 + gap_{max}]$, identify a set of first points after junctions $J = \{j_i\}$.

2. Given $gap_{max}$ find a maximum possible coverage of $J$ by the gap to provide a subset of junction points to cover:

$J' = \{j_i'\}$ and an optimal gap size $gap_{req}$ that to cover $J'$, where gap size is a size between a last point of a previous sub-trajectory and a first point of a next sub-trajectory.

3.

$$g_{start} = \max(J') - gap_{req};$$

and

$$gap_{length} = random(\max(gap_{min}, gap_{req}), gap_{max}).$$

As shown in block 208 of Figure 2, the apparatus 102 includes means, such as the processing circuitry 106, the memory 108, or the like, configured to encode at least the first subsequence of the location probe data points and the second subsequence of the location probe data points in a database to provide anonymized mobility data for the vehicle. For example, in one or more embodiments, the first subsequence of the location probe data points and the second subsequence of the location probe data points can be encoded into the probe database 104, a map database (e.g., map database 610 illustrated in Figure 6), and/or another database accessible by the apparatus 102. In certain embodiments, the apparatus 102, such as the processing circuitry 106, can be configured to convert the first subsequence of the location probe data points and the second subsequence of the location probe data points into a format for storage and/or categorization by the database.

In certain embodiments, the apparatus 102, such as the processing circuitry 106, can be configured to map at least the first subsequence of the location probe data points and the second subsequence of the location probe data points onto one or more map data layers of a map (e.g., an HD map) to facilitate the autonomous driving for vehicles. For instance, in certain embodiments, the apparatus 102, such as the processing circuitry 106, can be configured to store at least the first subsequence of the location probe data points and the second subsequence of the location probe data points in a map data layer of a map (e.g., an HD map) for mapping purposes, navigation purposes, and/or autonomous driving purposes. In certain embodiments, the apparatus 102, such as the processing circuitry 106, can be configured to link and/or associate at least the first subsequence of the location probe data points and the second subsequence of the location probe data points with one or more portions, components, areas, layers, features, text, symbols, and/or data records of a map (e.g., an HD map).

In one or more embodiments, the apparatus 102, such as the processing circuitry 106, can be configured to generate a data point for a map layer associated with the road network based on at least the first subsequence of the location probe data points and the second subsequence of the location probe data points. Additionally or alternatively, in one or more embodiments, the apparatus 102, such as the processing circuitry 106, can be configured to store at least the first subsequence of the location probe data points and the second subsequence of the location probe data points in a database associated with the map layer.

In one or more embodiments, the apparatus 102, such as the processing circuitry 106, can be configured to generate one or more road links (e.g., one or more map-matched road links) for a road network based on at least the first subsequence of the location probe data points and the second subsequence of the location probe data points to facilitate autonomous driving for vehicles associated with the road network. A map service provider database can be used to provide driver assistance, such as via a navigation system and/or through an ADAS having autonomous or semi-autonomous vehicle control features.

Referring to Figure 8, illustrated is a communication diagram of an example embodiment of a system for implementing example embodiments described herein. The illustrated embodiment of Figure 8 includes a mobile device 804, which can be, for example, the apparatus 102 of Figure 1, such as a mobile phone, an in-vehicle navigation system, an ADAS, or the like. The illustrated embodiment of Figure 8 also includes a map data service provider 808. The mobile device 804 and the map data service provider 808 can be in communication via a network 812. The network 812 can be any form of wireless or partially wireless network as will be described further below. Additional, different, or fewer components can be provided. For example, many mobile devices 804 can connect with the network 812. In an embodiment, the map data service provider can be a cloud service. For instance, in certain embodiments, the map data service provider 808 can provide cloud-based services and/or can operate via a hosting server that receives, processes, and provides data to other elements of the system 800.

The map data service provider 808 can include a map database 810 that can node data including at least the first subsequence of the location probe data points, the second subsequence of the location probe data points, road network data or link data, point of interest (POI) data, traffic data or the like. The map database 810 can also include cartographic data, routing data, and/or maneuvering data. According to some example embodiments, the road network data records can be links or segments representing roads, streets, or paths, as can be used in calculating a route or recorded route information for determination of one or more personalized routes. The node data can be end points corresponding to the respective links, nodes or segments of road network data. The road network data can represent a road network, such as used by vehicles, cars, trucks, buses, motorcycles, and/or other entities. Optionally, the map database 810 can contain path segment and node data records or other data that can represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 810 can include data about the POIs and their respective locations in the POI records. The map database 810 can include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 810 can include event data (e.g., traffic incidents, construction activities, scheduled events, unscheduled events, etc.) associated with the POI data records or other records of the map database 810.

The map database 810 can be maintained by the map data service provider 808 and can be accessed, for example, by a processing server 802 of the map data service provider 808. By way of example, the map data service provider 808 can collect geographic data and/or dynamic data to generate and enhance the map database 810. In one example, the dynamic data can include traffic-related data. There can be different ways used by the map data service provider 808 to collect data. These ways can include obtaining data from other sources, such as municipalities or respective geographic authorities, such as via global information system databases. In addition, the map data service provider 808 can employ field personnel to travel by vehicle along roads throughout the geographic region to observe features and/or record information about them, for example. Also, remote sensing, such as aerial or satellite photography and/or LiDAR, can be used to generate map geometries directly or through machine learning as described herein. However, the most ubiquitous form of data that can be available is vehicle data provided by vehicles, such as provided, e.g., as probe points, by mobile device 804, as they travel the roads throughout a region.

In an embodiment, the map database 810 can be a master map database, such as an HD map database, stored in a format that facilitates updates, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems. For example, geographic data can be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle represented by mobile device 804, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

As mentioned above, the map database 810 of the map data service provider 808 can be a master geographic database, but in alternate embodiments, a client side map database can represent a compiled navigation database that can be used in or with end user devices (e.g., mobile device 804) to provide navigation and/or map-related functions. For example, the map database 810 can be used with the mobile device 804 to provide an end user with navigation features. In such a case, the map database 810 can be downloaded or stored on the end user device which can access the map database 810 through a wireless or wired connection, such as via a processing server 802 and/or the network 812, for example.

In one embodiment, as noted above, the end user device or mobile device 804 can be embodied by the apparatus 102 of Figure 1 and can include an ADAS which can include an infotainment in-vehicle system or an in-vehicle navigation system, and/or devices such as a personal navigation device (PND), a portable navigation device, a cellular telephone, a smart phone, a PDA, a watch, a camera, a computer, a server and/or other device that can perform navigation-related functions, such as digital routing and map display. An end user can use the mobile device 804 for navigation and map functions such as guidance and map display, for example, and for determination of useful driver assistance information, according to some example embodiments.

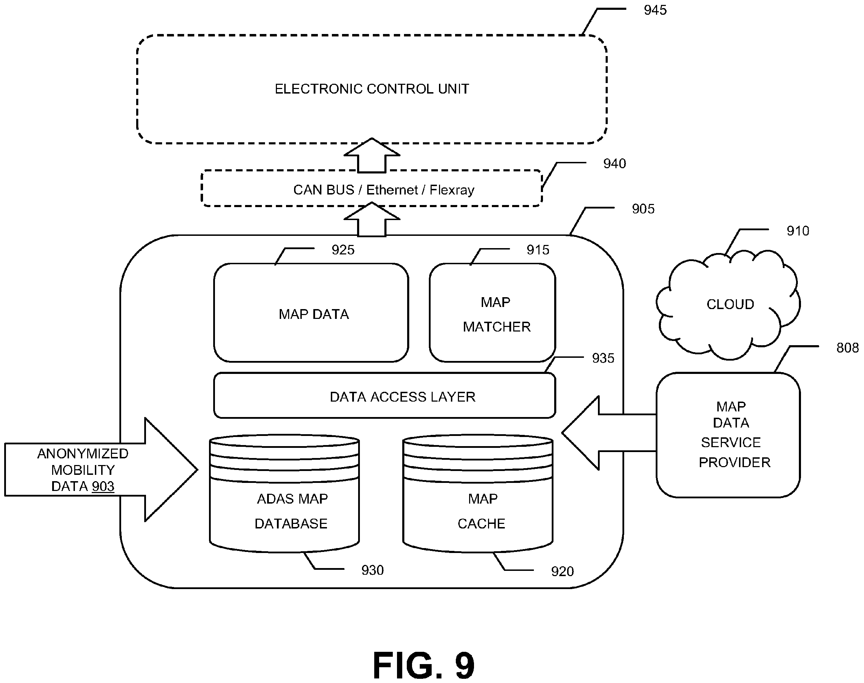

As illustrated in Figure 9, an architecture includes the map data service provider 808 that provides map data 925 (e.g., a traffic classification profile) to an Advanced Driver Assistance System (ADAS) 905, which may be vehicle-based or server based depending upon the application. The map data service provider 808 may be a cloud-based 910 service. The ADAS 905 receives anonymized mobility data 903 (e.g., location probe data points) and may provide the anonymized mobility data 903 to map matcher 915. The map matcher 915 may correlate the vehicle position to a road network portion on a map of the mapped network of roads stored in the map cache 920. This link or segment, along with the direction of travel, may be used to facilitate navigation applicable to the vehicle associated with the ADAS 905, including sensor capability information, autonomous functionality information, etc. The map data 925 associated with the road network specific to the vehicle are provided to the vehicle control, such as via the CAN (computer area network) BUS (or Ethernet or Flexray) 940 to the electronic control unit (ECU) 945 of the vehicle to implement HD map policies, such as various forms of autonomous or assisted driving, or navigation assistance. In certain embodiments, a data access layer 935 can manage and/or facilitate access to the map cache 920, the map data 925, and/or an ADAS map database 930. In one or more embodiments, at least a portion of the map database 810 corresponds to the ADAS map database 930.

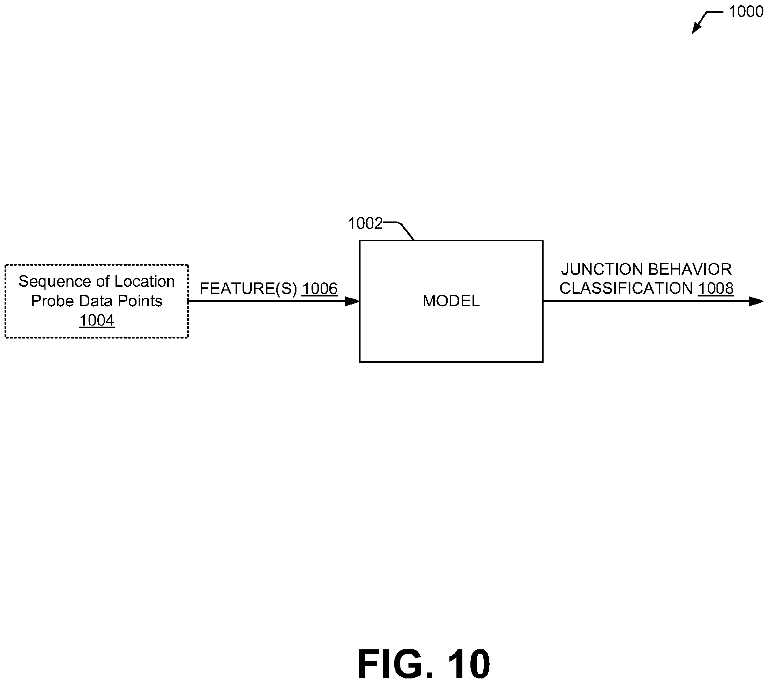

Figure 10 illustrates a system 1000 configured to provide junction finder functionality in accordance with one or more embodiments of the present disclosure. The system 1000 includes a model 1002. The model 1002 can be a machine learning model that is trained based on a set of labels associated with junction probe data points and non-junction probe data points. For example, a trained version of the model 1002 (e.g., the model 1002 configured as a machine learning model) can be configured to classify one or more portions of a sequence of location probe data points 1004 as junction behavior. In various embodiments, one or more data features 1006 associated with the sequence of location probe data points 1004 can be applied to the model 1002 (e.g., the model 1002 configured as a machine learning model) to classify a portion of the sequence of location probe data points 1004 as a junction behavior classification 1008. In one or more embodiments, labeled examples of junctions employed as training data for the model 1002 (e.g., the machine learning model) can be obtained by map-matching probe data points to corresponding locations of known junctions and/or verified junctions of the map database 810. Additionally, negative labeled examples of junctions (or non-junction examples) employed as training data for the model 1002 (e.g., the machine learning model) can be provided by map-matching probe data from locations where no junctions are present in the map database 810. Alternatively or additionally, probe data points corresponding to verified intersections can be manually labeled to provide at least a portion of the training data for the model 1002 (e.g., the machine learning model).

In another embodiment, the model 1002 can be a deterministic model that is configured based on a set of rules associated with junction probe data points and non-junction probe data points. For example, the one or more data features 1006 associated with the sequence of location probe data points 1004 can be applied to a version of the model 1002 configured as a deterministic model to classify one or more portions of a sequence of location probe data points 1004 as junction behavior (e.g., the junction behavior classification 1008).

The one or more features 116 can be related to latitude data associated with a vehicle (e.g., the vehicle 302) during capture of one or more location probe data points within the sequence of location probe data points 1004, longitude data associated with a vehicle (e.g., the vehicle 302) during capture of one or more location probe data points within the sequence of location probe data points 1004, timestamp data for one or more location probe data points within the sequence of location probe data points 1004, speed data for vehicle (e.g., the vehicle 302) during capture of one or more location probe data points within the sequence of location probe data points 1004, sensor data associated with a vehicle (e.g., the vehicle 302) during capture of one or more location probe data points within the sequence of location probe data points 1004, predetermined map data associated with one or more location probe data points within the sequence of location probe data points 1004, and/or heading data indicative of a direction of travel associated with a vehicle (e.g., the vehicle 302) during capture of one or more location probe data points within the sequence of location probe data points 1004. In certain embodiments, the one or more features 116 can be determined based on a combination of at least two of the latitude data, the longitude data, the timestamp data, the speed data, or the heading data.

In certain embodiments, the model 1002 can identify a first portion in the sequence of location probe data points 1004 as a potential origin location of a vehicle during a journey associated with travel of the vehicle along a portion of a road network. The model 1002 can also identify junction behavior in the first portion in the sequence of location probe data points 1004 based on the one or more features 1006. Additionally or alternatively, in certain embodiments, the model 1002 can identify a last portion in the sequence of location probe data points 1004 as a potential destination location of the vehicle during the journey associated with the travel of the vehicle along the portion of the road network. The model 1002 can additionally or alternatively identify the junction behavior in the last portion in the sequence of location probe data points 1004 based on the one or more features 1006.

In certain embodiments, a gap placement can be applied to the first portion in the sequence of location probe data points 1004 and/or the last portion in the sequence of location probe data points 1004. In certain embodiments, location probe data points prior a gap placement can be removed until a start probe data point location within the first portion in the sequence of location probe data points 1004. A start probe data point location can be determined, for example, based on one or more vehicles events related to a start of a journey (e.g., an engine of a vehicle turning on, a door of a vehicle closing, a set pressure sensor of the vehicle turning on, etc.). In certain embodiments, location probe data points after a gap placement can be removed until an end probe data point location within the first portion in the sequence of location probe data points 1004. An end probe data point location can be determined, for example, based on one or more vehicles events related to an end of a journey (e.g., an engine of a vehicle turning off, a door of a vehicle opening, a set pressure sensor of the vehicle turning off, etc.). In certain embodiments, a start probe data point location and/or an end probe data point location can be determined based on navigation system data of a vehicle. In certain embodiments, a start probe data point location and/or an end probe data point location can be determined based on a degree of delay with respect to transmission of one or more data probe chunks and/or sub-trajectories. In certain embodiments, one or more transmitted data probe chunks and/or sub-trajectories can be omitted for an end probe data point location based on a threshold distance and/or an interval of time with respect to a start probe data point location.

By providing intelligent gap placement within mobility data using junctions inferred by features of a trajectory in accordance with one or more example embodiments of the present disclosure, precision and/or confidence of location prediction for vehicles can be improved. Furthermore, by providing intelligent gap placement within mobility data using junctions inferred by features of a trajectory in accordance with one or more example embodiments of the present disclosure, improved navigation of a vehicle can be provided, improved route guidance for a vehicle can be provided, improved semi-autonomous vehicle control can be provided, and/or improved fully autonomous vehicle control can be provided. Moreover, in accordance with one or more example embodiments of the present disclosure, efficiency of an apparatus including the processing circuitry can be improved and/or the number of computing resources employed by processing circuitry can be reduced.

Many modifications and other embodiments of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Furthermore, in some embodiments, additional optional operations can be included. Modifications, additions, or amplifications to the operations above can be performed in any order and in any combination.

Moreover, although the foregoing descriptions and the associated drawings describe example embodiments in the context of certain example combinations of elements and/or functions, it should be appreciated that different combinations of elements and/or functions can be provided by alternative embodiments without departing from the scope of the appended claims. In this regard, for example, different combinations of elements and/or functions than those explicitly described above are also contemplated as can be set forth in some of the appended claims. Although specific terms are employed herein, they are used in a generic and descriptive sense only and not for purposes of limitation.

Furthermore, the following further exemplary embodiments of the invention are disclosed:

Embodiment 1: An apparatus comprising processing circuitry and at least one memory including computer program code instructions, the computer program code instructions configured to, when executed by the processing circuity, cause the apparatus to: receive a sequence of location probe data points representative of travel of a vehicle along a portion of a road network during an interval of time; identify junction behavior in the sequence of location probe data points based on one or more features for the sequence of location probe data points; apply, based on a junction point that corresponds to a location probe data point immediately after a last probe data point in the junction, a gap placement in the sequence of location probe data points to generate at least a first subsequence of the location probe data points and a second subsequence of the location probe data points; and encode at least the first subsequence of the location probe data points and the second subsequence of the location probe data points in a database to provide anonymized mobility data for the vehicle.

Embodiment 2: The apparatus according to embodiment 1, wherein the computer program code instructions are configured to, when executed by the processing circuity, cause the apparatus to: determine the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

Embodiment 3: The apparatus according to embodiment 2, wherein the computer program code instructions are configured to, when executed by the processing circuity, cause the apparatus to: apply the one or more data features to a machine learning model configured to classify a portion of the sequence of location probe data points as the junction behavior.

Embodiment 4: The apparatus according to embodiment 3, wherein the computer program code instructions are configured to, when executed by the processing circuity, cause the apparatus to:train the machine learning model based on a set of labels associated with junction probe data points and non-junction probe data points.

Embodiment 5: The apparatus according to embodiment 2, wherein the computer program code instructions are configured to, when executed by the processing circuity, cause the apparatus to: apply the one or more data features to a deterministic model configured to classify a portion of the sequence of location probe data points as the junction behavior.

Embodiment 6: The apparatus according to embodiment 5, wherein the computer program code instructions are configured to, when executed by the processing circuity, cause the apparatus to: configure the deterministic model based on a set of rules associated with junction probe data points and non-junction probe data points.

Embodiment 7: The apparatus according to embodiment 1, wherein the computer program code instructions are configured to, when executed by the processing circuity, cause the apparatus to: identify a first portion in the sequence of location probe data points as a potential origin location of the vehicle during a journey associated with the travel of the vehicle along the portion of the road network; identify the junction behavior in the first portion in the sequence of location probe data points based on the one or more features for the sequence of location probe data points; and apply the gap placement in the first portion in the sequence of location probe data points.

Embodiment 8: The apparatus according to embodiment 1, wherein the computer program code instructions are configured to, when executed by the processing circuity, cause the apparatus to: identify a last portion in the sequence of location probe data points as a potential destination location of the vehicle during a journey associated with the travel of the vehicle along the portion of the road network; identify the junction behavior in the last portion in the sequence of location probe data points based on the one or more features for the sequence of location probe data points; and apply the gap placement in the last portion in the sequence of location probe data points.

Embodiment 9: The apparatus according to embodiment 1, wherein at least the first subsequence of the location probe data points and the second subsequence of the location probe data points correspond to the anonymized mobility data for the vehicle.

Embodiment 10: A computer-implemented method, comprising: receiving a sequence of location probe data points representative of travel of a vehicle along a portion of a road network during an interval of time; identifying junction behavior in the sequence of location probe data points based on one or more features for the sequence of location probe data points; applying, based on a junction point that corresponds to a location probe data point immediately after a last probe data point in the junction, a gap placement in the sequence of location probe data points to generate at least a first subsequence of the location probe data points and a second subsequence of the location probe data points; and encoding at least the first subsequence of the location probe data points and the second subsequence of the location probe data points in a database to provide anonymized mobility data for the vehicle.

Embodiment 11: The computer-implemented method according to embodiment 10, further comprising: determining the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

Embodiment 12: The computer-implemented method according to embodiment 11, further comprising: applying the one or more data features to a machine learning model configured to classify a portion of the sequence of location probe data points as the junction behavior.

Embodiment 13: The computer-implemented method according to embodiment 12, further comprising: training the machine learning model based on a set of labels associated with junction probe data points and non-junction probe data points.

Embodiment 14: The computer-implemented method according to embodiment 11, further comprising: applying the one or more data features to a deterministic model configured to classify a portion of the sequence of location probe data points as the junction behavior.

Embodiment 15: The computer-implemented method according to embodiment 14, further comprising: configuring the deterministic model based on a set of rules associated with junction probe data points and non-junction probe data points.

Embodiment 16: The computer-implemented method according to embodiment 10, further comprising: identifying a first portion in the sequence of location probe data points as a potential origin location of the vehicle during a journey associated with the travel of the vehicle along the portion of the road network; identifying the junction behavior in the first portion in the sequence of location probe data points based on the one or more features for the sequence of location probe data points; and applying the gap placement in the first portion in the sequence of location probe data points.

Embodiment 17: The computer-implemented method according to embodiment 10, further comprising: identifying a last portion in the sequence of location probe data points as a potential destination location of the vehicle during a journey associated with the travel of the vehicle along the portion of the road network; identifying the junction behavior in the last portion in the sequence of location probe data points based on the one or more features for the sequence of location probe data points; and applying the gap placement in the last portion in the sequence of location probe data points.

Embodiment 18: A computer program product comprising at least one non-transitory computer-readable storage medium having computer-executable program code instructions stored therein, the computer-executable program code instructions comprising program code instructions to: determine a sequence of location probe data points representative of travel of a vehicle along a portion of a road network during an interval of time; identify junction behavior in the sequence of location probe data points based on one or more features for the sequence of location probe data points; apply, based on a junction point that corresponds to a location probe data point immediately after a last probe data point in the junction, a gap placement in the sequence of location probe data points to generate at least a first subsequence of the location probe data points and a second subsequence of the location probe data points, wherein at least the first subsequence of the location probe data points and the second subsequence of the location probe data points correspond to anonymized mobility data for the vehicle associated with the road network; and cause transmission of the anonymized mobility data to a server computing device.

Embodiment 19: The computer program product according to embodiment 18, the computer-executable program code instructions further comprising program code instructions to: determine the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

Embodiment 20: The computer program product according to embodiment 19, the computer-executable program code instructions further comprising program code instructions to: apply the one or more data features to a model configured to classify a portion of the sequence of location probe data points as the junction behavior.

## Claims

1. A computer-implemented method, comprising:

    receiving a sequence of location probe data points representative of travel of a vehicle along a portion of a road network during an interval of time;
    identifying junction behavior in the sequence of location probe data points based on one or more features for the sequence of location probe data points;
    applying, based on a junction point that corresponds to a location probe data point immediately after a last probe data point in the junction, a gap placement in the sequence of location probe data points to generate at least a first subsequence of the location probe data points and a second subsequence of the location probe data points; and
    encoding at least the first subsequence of the location probe data points and the second subsequence of the location probe data points in a database to provide anonymized mobility data for the vehicle.

2. The computer-implemented method according to claim 1, further comprising:
    determining the one or more features based on a combination of at least two of latitude data associated with the vehicle during capture of one or more location probe data points within the sequence of location probe data points, longitude data associated with the vehicle during capture of one or more location probe data points within the sequence of location probe data points, timestamp data for one or more location probe data points within the sequence of location probe data points, speed data for the vehicle during capture of one or more location probe data points within the sequence of location probe data points, or heading data indicative of a direction of travel associated with the vehicle during capture of one or more location probe data points within the sequence of location probe data points.

3. The computer-implemented method according to claim 2, further comprising:
    applying the one or more data features to a machine learning model configured to classify a portion of the sequence of location probe data points as the junction behavior.

**4.** The computer-implemented method according to claim 3, further comprising:
training the machine learning model based on a set of labels associated with junction probe data points and non-junction probe data points.

**5.** The computer-implemented method according to claim 2, further comprising:
applying the one or more data features to a deterministic model configured to classify a portion of the sequence of location probe data points as the junction behavior.

**6.** The computer-implemented method according to claim 5, further comprising:
configuring the deterministic model based on a set of rules associated with junction probe data points and non-junction probe data points.

**7.** The computer-implemented method according to any of claims 1 to 6, further comprising:

identifying a first portion in the sequence of location probe data points as a potential origin location of the vehicle during a journey associated with the travel of the vehicle along the portion of the road network;
identifying the junction behavior in the first portion in the sequence of location probe data points based on the one or more features for the sequence of location probe data points; and
applying the gap placement in the first portion in the sequence of location probe data points.

**8.** The computer-implemented method according to any of claims 1 to 7, further comprising:

identifying a last portion in the sequence of location probe data points as a potential destination location of the vehicle during a journey associated with the travel of the vehicle along the portion of the road network;
identifying the junction behavior in the last portion in the sequence of location probe data points based on the one or more features for the sequence of location probe data points; and
applying the gap placement in the last portion in the sequence of location probe data points.

**9.** The computer-implemented method according to any of claims 1 to 8, further comprising:
wherein at least the first subsequence of the location probe data points and the second subsequence of the location probe data points correspond to the anonymized mobility data for the vehicle.

**10.** An apparatus comprising means configured for performing the computer-implemented method according to any of claims 1 to 9.

**11.** The apparatus according to claim 10, wherein the means comprise processing circuitry and at least one memory including computer program code instructions, the computer program code instructions configured to, when executed by the processing circuity, cause the apparatus to perform the computer-implement method according to any of claims 1 to 9.

**12.** A computer program having computer-executable program code instructions comprising program code instructions which, when executed by one or more processors, cause an apparatus to perform the computer-implement method according to any of claims 1 to 9.

APPARATUS **102**

PROCESSING
CIRCUITRY **106**

MEMORY **108**

COMMUNICATION
INTERFACE **110**

USER INTERFACE
**112**

PROBE DATABASE
**104**

SENSOR(S) **114**

100

**FIG. 1**

200

┌─────────────────────────────────────────────────────────┐
│                                                          │ 202
│  RECEIVE A SEQUENCE OF LOCATION PROBE DATA POINTS        │
│  REPRESENTATIVE OF TRAVEL OF A VEHICLE ALONG A PORTION   │
│  OF A ROAD NETWORK DURING AN INTERVAL OF TIME            │
│                                                          │
└─────────────────────────────────────────────────────────┘

┌─────────────────────────────────────────────────────────┐
│                                                          │ 204
│  IDENTIFY JUNCTION BEHAVIOR IN THE SEQUENCE OF LOCATION  │
│  PROBE DATA POINTS BASED ON ONE OR MORE FEATURES FOR     │
│  THE SEQUENCE OF LOCATION PROBE DATA POINTS              │
│                                                          │
└─────────────────────────────────────────────────────────┘

┌─────────────────────────────────────────────────────────┐
│                                                          │ 206
│  APPLY, BASED ON A JUNCTION POINT THAT CORRESPONDS TO A  │
│  LOCATION PROBE DATA POINT IMMEDIATELY AFTER A LAST      │
│  PROBE DATA POINT IN THE JUNCTION, A GAP PLACEMENT IN THE│
│  SEQUENCE OF LOCATION PROBE DATA POINTS TO GENERATE AT   │
│  LEAST A FIRST SUBSEQUENCE OF THE LOCATION PROBE DATA    │
│  POINTS AND A SECOND SUBSEQUENCE OF THE LOCATION PROBE   │
│  DATA POINTS                                             │
│                                                          │
└─────────────────────────────────────────────────────────┘

┌─────────────────────────────────────────────────────────┐
│                                                          │ 208
│  ENCODE AT LEAST THE FIRST SUBSEQUENCE OF THE LOCATION   │
│  PROBE DATA POINTS AND THE SECOND SUBSEQUENCE OF THE     │
│  LOCATION PROBE DATA POINTS IN A DATABASE TO PROVIDE     │
│  ANONYMIZED MOBILITY DATA FOR THE VEHICLE                │
│                                                          │
└─────────────────────────────────────────────────────────┘

# FIG. 2

300

302

VEHICLE

DATA COLLECTION DEVICE 304

306

NETWORK

102

APPARATUS

# FIG. 3

FIG. 4

400'

408    501

504a

502n

504n

406

404

502a

# FIG. 5

FIG. 6

FIG. 7

EP 4 375 620 A1

800

808

MAP DATA SERVICE PROVIDER

810

802

MAP
DATABASE

PROCESSING
SERVER

812

804

MOBILE DEVICE

NETWORK

**FIG. 8**

**FIG. 9**

FIG. 10

Europäisches
Patentamt

European
Patent Office

Office européen
des brevets

# EUROPEAN SEARCH REPORT

Application Number

EP 23 21 2389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zuberi Rubina Shahin ET AL: "DETECTION OF ROAD INTERSECTIONS USING HISTORY TRAJECTORY DATA FOR EVOLVING MIX-ZONES", International Journal on Advanced Computer Theory and Engineering (IJACTE), vol. 3, no. 1 1 January 2014 (2014-01-01), pages 28-32, XP093150107, ISSN: 2319-2526 Retrieved from the Internet: URL:http://www.irdindia.in/journal_ijacte/pdf/vol3_iss1/5.pdf [retrieved on 2024-04-10] | 1,2,5-8, 10-12 | INV. G01C21/26 G06F21/62 G08G1/01 H04W4/02 H04W12/02 |
| Y | * Sections III, IV * | 3,4 | |
| Y | ALIREZA FATHI ET AL: "Detecting Road Intersections from GPS Traces", 14 September 2010 (2010-09-14), GEOGRAPHIC INFORMATION SCIENCE, SPRINGER BERLIN HEIDELBERG, BERLIN, HEIDELBERG, PAGE(S) 56 - 69, XP019149355, ISBN: 978-3-642-15299-3 * Section 4 * | 3,4 | |
| A | US 2022/026225 A1 (BENNATI STEFANO [SZ] ET AL) 27 January 2022 (2022-01-27) * the whole document * | 7,8 | TECHNICAL FIELDS SEARCHED (IPC) G01C G06F H04W G08G |
| A | US 2019/373403 A1 (AJMERI NIRAV [US] ET AL) 5 December 2019 (2019-12-05) * abstract * | 1-12 | |

The present search report has been drawn up for all claims

| Place of search | Date of completion of the search | Examiner |
|---|---|---|
| The Hague | 11 April 2024 | van Doornum, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2389

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | | Publication date | Patent family member(s) | | Publication date |
|---|---|---|---|---|---|
| US 2022026225 | A1 | 27-01-2022 | EP | 3944113 A1 | 26-01-2022 |
| | | | EP | 4235476 A1 | 30-08-2023 |
| | | | US | 2022026225 A1 | 27-01-2022 |
| US 2019373403 | A1 | 05-12-2019 | US | 10382889 B1 | 13-08-2019 |
| | | | US | 2019373403 A1 | 05-12-2019 |

For more details about this annex : see Official Journal of the European Patent Office, No. 12/82